# EUROPEAN PATENT APPLICATION

(11) **EP 1 293 895 A2**
(43) Date of publication of application: **19.03.2003**
(21) Application number: 02256419.9
(22) Date of filing: 13.09.2002
(51) Int. Cl.: G06F 9/445

(54) **Program execution apparatus, method for creating an executable program and address solution method**

(30) Priority: 14.09.2001 JP 2001280642
(71) Applicant: Ricoh Company, Tokyo 143-8555 (JP)
(72) Inventor: Yoshiaki, Irino, Kawasaki-shi, Kanagawa (JP)
(74) Representative: Senior, Alan Murray

(57) **Abstract**

A program execution apparatus for creating an executable program and executing the program includes a conversion module creating unit which creates an address reference conversion module containing a function call to call an external function module that is called from a source program. A program transforming unit transforms the source program into an object program. A linking unit links the object program produced by the program transforming unit to the address reference conversion module created by the conversion module creating unit to form an executable program, thereby the executable program containing the function call.

## Description

The present invention relates to a program execution apparatus and method for creating an executable program, a computer program for performing the program execution method, an image forming system in which the control services and the application programs are linked in order to provide an image forming service, and an address solution method for replacing virtual addresses of called functions with physical addresses on main memory.

In recent years, an image forming system in which the respective functions of the printer, the copier, the facsimile and the scanner are installed in the same equipment is known. Hereinafter, the image forming system of this type will be called a multi-function machine. The multi-function machine is provided with three kinds of software corresponding to the printer, the copier, and the facsimile, respectively, and operates the equipment concerned as the printer, the copier, the scanner, or the facsimile by changing the software from one to another.

Moreover, the multi-function machine is provided with the display, the printing unit, the image reading unit, etc. that are installed in the single system.

Such a conventional multi-function machine is configured by preparing separately the software (the general-purpose OS being included) corresponding to the printer, the copier, the scanner, and the facsimile, respectively, and the development of each software takes great time.

As for the application program which operates with the multi-function machine, it is common to have developed by the multi-function machine developer at one location.

For this reason, the image forming system should have the hardware resources used by the image forming processing of the display unit, the printing unit, the image reading unit, etc. The image forming system should be provided with a plurality of applications which perform the processing respectively specific to each user service of the printer, the copy or the facsimile. And the image forming system should have the platform which is interposed between the applications and the hardware resources and include various control services which perform management of hardware resources needed in common by at least two applications, the execution control, and the image forming processing being offered.

When the user service is offered, it is requested that the image forming system is equipped with the above-described platform. While attaining the increase in efficiency of the software development by considering as the composition equipped with the platform which performs the above-described functions, it becomes possible to raise the productivity as the whole equipment.

When developing the software which operates with such a multi-function machine, it is desirable, in linking or combining the module and the external function module concerned, to complete the module in order to reduce the development working efficiency and the program size, by making it possible to share the common library of the external functions that are called in common from two or more modules and the object file and are generated from the source file of the module for development.

Generally as a method which combines the module and external function module for development, there are two conventional methods: (1) static-link (pre-execution combination) method and (2) dynamic-link (combination at the time of execution) method, which will be described below.

### (1) Static-Link Method

Static-link method is a method which links or combines all the modules that may be needed before execution. By the static-link method, the direct reference of absolute addresses on the virtual memory of the functions in the common library is carried out by the module for development. The module is combined beforehand. Therefore, when necessity arises, there is the advantage that the required module can be executed quickly.

### (2) Dynamic-Link Method

Dynamic link method is a method which combines the required module at any time at the time of execution. The same module can be referred to from two or more programs. Therefore, there is the advantage that the size of the whole program can be made small by preparing the library of the modules used in common.

However, when developing the software which operates with the multi-function machine, both the static-link method and the dynamic-link method have the following technical problems.

First, in the case of the static-link method, in order to combine all modules with the executable program beforehand, there is the problem that the size of the whole program increases.

Moreover, since it has the composition that each module of having two or more control services which offer the service of two or more applications and application which at least two need in common in the multi-function machine became independent, it is desirable that it can develop separately for every application and every control service. For example, it is conceivable that while the development of the modules of control services is performed by the multi-function machine developer, the development of the applications is performed by the third party to which the development is entrusted.

However, when the static-link method is adopted, it is necessary that the direct reference of the absolute addresses on the virtual memory of the external functions be performed by the module side for development, and there is the problem that it becomes difficult to create each module separately. Especially, in changing the specifications of the external function of the common library or developing new version of the multi-function machine by adding new external functions, the change of the absolute addresses of the functions is needed, not only for the common library but for each application and each control service module which call the common library, resulting in the problem that the working efficiency deteriorates.

In the case of the dynamic-link method, in order to perform modular linking processing at the time of execution, there is the problem that the performance of the executable program tends to fall because of the overhead accompanying the modular linking processing. Moreover, the processing for the address solution must be incorporated for every module, and there is the problem that the size of each the respective modules according to the dynamic-link method becomes large as compared with the module according to the static-link method.

In this regard, Japanese Laid-Open Patent Application No. 6-250828 discloses a library module management method in which the modules to combine are classified according to the use frequency, the static link of the module group with high use frequency is beforehand carried out to the executable program, and the module group with low use frequency is made to carry out the dynamic link at the time of execution. The purpose of this method is to improve the program-execution speed.

However, it is difficult to expect beforehand the use frequency of the module concerned because, in the case of the executable program of the incorporation type for the multi-function machine, the contents of the processing are varied depending on the input events supplied from the outside modules. Moreover, the problem that the size of the module linked at the time of execution becomes large is not solved by the method according to the above-mentioned document (Japanese Laid-Open Patent Application No. 6-250828).

An object of the present invention is to provide an improved program execution apparatus and method, a computer program, an image forming system and an address solution method in which the above-described problems are eliminated.

Another object of the present invention is to provide a program execution apparatus and method, a computer program, an image forming system and an address solution method which make it easy to develop separately for each program module and aim at improvement in the working efficiency with respect to the executable program of the incorporation type for the image forming system.

Another object of the present invention is to provide a program execution apparatus and method, a computer program, an image forming system and an address solution method which aim to reduction of the program size and can be flexibly dealt with the updating or the correction of each module.

The above-mentioned objects of the present invention are achieved by a program execution apparatus program execution apparatus for creating an executable program and executing the program, comprising: a conversion module creating unit creating an address reference conversion module containing a function call to call an external function module that is called from a source program; a program transforming unit transforming the source program into an object program; and a linking unit linking the object program produced by the program transforming unit to the address reference conversion module created by the conversion module creating unit to form an executable program, thereby the executable program containing the function call.

The above-mentioned objects of the present invention are achieved by a program execution method for creating an executable program and executing the program, comprising the steps of: creating an address reference conversion module containing a function call to call an external function module that is called from a source program; transforming the source program into an object program; and linking the object program produced by the transforming step to the address reference conversion module created by the creating step to form an executable program, thereby the executable program containing the function call.

The above-mentioned objects of the present invention are achieved by a computer program embodied therein for performing a program execution method, comprising: first program code means for creating an address reference conversion module containing a function call to call an external function module that is called from a source program; second program code means for transforming the source program into an object program; and third program code means for linking the object program produced by the second program code means to the address reference conversion module created by the first program code means to form an executable program, thereby the executable program containing the function call.

The above-mentioned objects of the present invention are achieved by a program execution apparatus for creating an executable program and executing the program, comprising: a first common library containing one or a plurality of first function modules called in common by a plurality of programs, and first function arrangement information indicating an absolute address of each first function module on a memory; and a conversion module creating unit creating a first address reference conversion module containing a function call to call one of the first function modules at a corresponding absolute address thereof based on the first function arrangement information, wherein the executable program is created by combining the first address reference conversion module, and, when the executable program is run, the corresponding absolute address of said one of the first function modules is stored into the first address reference conversion module contained in the executable program.

The above-mentioned objects of the present invention are achieved by an address solution method for use in a program execution apparatus including a common library containing one or a plurality of function modules called in common by a plurality of programs, and function arrangement information indicating an absolute address of each function module on a memory, the address solution method comprising the steps of: creating an address reference conversion module containing a function call to call one of the function modules at a corresponding absolute address thereof based on the function arrangement information; creating the executable program by combining the address reference conversion module; and storing, when receiving a request for program execution, the corresponding absolute address of the called function module into the address reference conversion module contained in the executable program.

According to the program execution apparatus and method of the present invention, the external function module referred to from the program is executed via the address reference conversion module which is linked to the program by the static link and contains a function call to call the external function module concerned. According to the program execution apparatus and method of the present invention, the size of the incorporation-type executable program can be reduced, and it is possible to flexibly deal with the updating and the correction of each program module.

According to the computer program of the present invention, it is possible to cause a computer to perform the above program execution method. Thus, the size of the incorporation-type executable program can be reduced, and it is possible to flexibly deal with the updating and the correction of each program module.

According to the program execution apparatus of the present invention, the program execution apparatus is provided in an image forming system having multi-function image forming hardware resource. If the application program is created by linking the address reference conversion module, it is not necessary to carry out the development of the application program that must be accompanied with the absolute address of the function module to be called. This makes it possible to easily carry out the program development separately from the program common library or other application programs. The development of application programs does not need to determine the absolute address of the function module called by preparing the address reference conversion module at the time of development. It is possible to easily upgrade the application program and raise the working efficiency of development of the application program.

According to the address solution method of the present invention, the address reference solution step is included. In this step, the absolute address on the memory of the called function is stored into the address reference conversion modules of the application program and control service program based on the function arrangement information. The processing of the address solution at the time of program execution will become simple, and it is possible to shorten the overhead at the time of program execution.

Other objects, features and advantages of the present invention will be apparent from the following detailed description when read in conjunction with the accompanying drawings.

FIG. 1 is a block diagram showing the hardware composition of the program execution apparatus of the first preferred embodiment of the present invention.

FIG. 2 is a block diagram showing the functional composition. of the program execution apparatus of the first preferred embodiment of the present invention.

FIG. 3 is a diagram showing an example of the shared program file stored in the executable-program storage unit of the first preferred embodiment of the present invention.

FIG. 4 is a diagram showing an example of the address reference conversion module stored into the address reference conversion module storage unit by the address reference conversion module creating unit of the first preferred embodiment of the present invention.

FIG. 5 is a diagram showing an example of the executable program stored into the executable-program storage unit by the program transformation unit of the first preferred embodiment of the present invention.

FIG. 6 is a flowchart for explaining the flow of processing from the program creation to the execution by the program execution apparatus of the first preferred embodiment of the present invention.

FIG. 7 is a block diagram showing the composition of the multi-function machine of the second preferred embodiment.

FIG. 8 is a diagram showing the relationship between the control services, the service common library and the runtime loader in the multi-function machine of the second preferred embodiment.

FIG. 9 is a diagram showing the arrangement on the virtual memory at the time of starting the process of the system control service in the multi-function machine of the second preferred embodiment.

FIG. 10 is a diagram showing the structure of the service common library in the multi-function machine of the second preferred embodiment.

FIG. 11 is a diagram showing the contents of the main program of the system control service in the multi-function machine of the second preferred embodiment.

FIG. 12 is a flowchart for explaining the procedure of address solution processing of the runtime loader in the multi-function machine of the second preferred embodiment.

FIG. 13A is a diagram for explaining the arrangement on the virtual memory at the time of starting the printer application in the multi-function machine of the third preferred embodiment of the present invention.

FIG. 13B is a diagram showing relationship between the application, the application common library 841 and the service common library 840 in the multi-function machine of the third preferred embodiment.

FIG. 14 is a diagram showing the structure of the application common library in the multi-function machine of the third preferred embodiment.

FIG. 15 is a diagram for explaining the contents of the main program of the printer application in the multi-function machine of the third preferred embodiment.

A description will now be provided of the preferred embodiments of the present invention with reference to the accompanying drawings.

First, the hardware composition of the program execution apparatus concerning the first preferred embodiment of the present invention will be described.

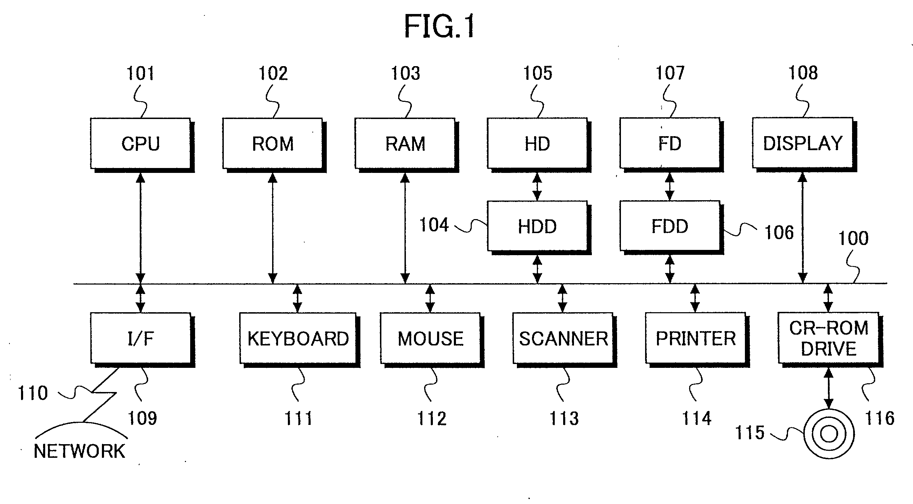

FIG. 1 shows the hardware composition of the program execution apparatus of the first preferred embodiment of the present invention. As shown in FIG. 1, the CPU (central processing unit) 101 is a control unit which controls the entire program execution apparatus, the ROM (read-only memory) 102 is a memory which stores the basic I/O program, and the RAM (random access memory) 103 is a memory that is used as a work area of the CPU 101.

In the program execution apparatus of FIG. 1, the HDD (hard disk drive) 104 is a disk drive which controls the read/write operation of data, stored in the HD (hard disk) 105, in accordance with the control of the CPU 101. The HD 105 is a storage medium that stores data which is written thereto in accordance with the write operation of the HDD 104.

Moreover, the FDD (floppy disk drive) 106 is a disk drive which controls the read/write operation of data, stored in the FD (floppy disk) 107, in accordance with the control of the CPU 101. The FD 107 is a removable storage medium that stores data which is written thereto in accordance with the write operation of the FDD 106.

Moreover, the display 108 is an output device which displays various data, such as the cursor, the menu, the window or the characters or images on the display screen. The I/F (interface) 109 is a network board which connects the program execution apparatus with a network via the communication line 110 and provides interface between the CPU 101 of the program execution apparatus and the network.

Moreover, the keyboard 111 is an input device which includes a plurality of keys for the inputs, such as the characters, the numeric values and various commands, and the mouse 112 is an input device which is provided for the selection and execution of various commands, for the selection of the processing object, and for the movement of the cursor.

Moreover, the scanner 113 optically reads the characters and the image of a document in accordance with the control of the CPU 101, and the printer 114 prints the characters and the image of data in accordance with the control of the CPU 101. The CD-ROM 115 is a removable optical recording medium. The CD-ROM drive 116 is an optical disk drive which controls the read operation of data, stored in the CD-ROM 115, in accordance with the control of the CPU 101. Reference numeral 100 indicates the bus or cable for interconnecting the above-mentioned elements of the program execution apparatus.

Next, the functional composition of the program execution apparatus of the first preferred embodiment of the present invention will be described.

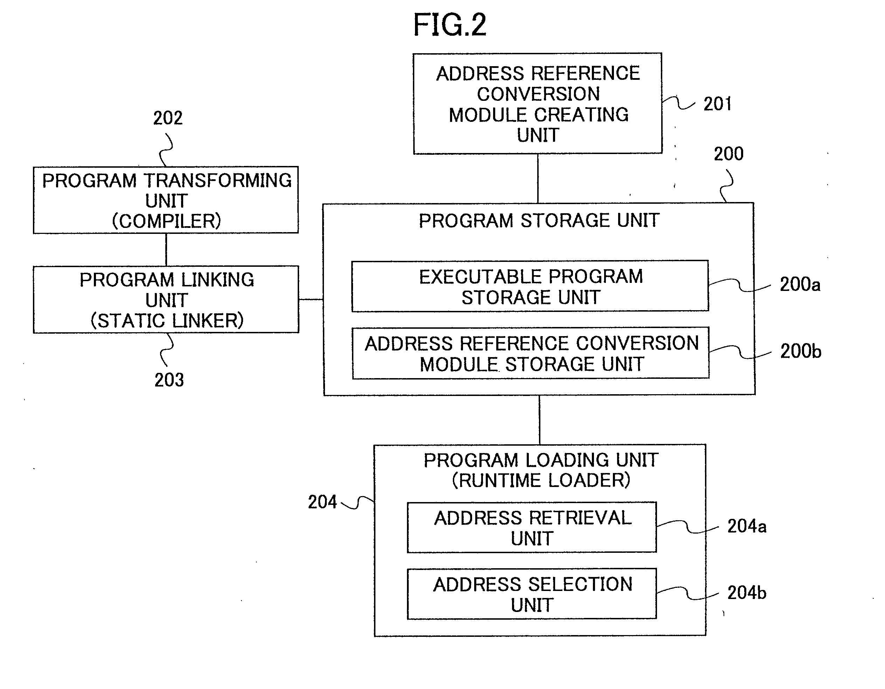

FIG. 2 shows the functional composition of the program execution apparatus of the first preferred embodiment of the present invention. As shown in FIG. 2, the program execution apparatus of the present embodiment is configured to include the program storage unit 200, the address reference conversion module creating unit 201, the program transformation unit 202, the program linking unit 203, and the program loading unit 204.

The program storage unit 200 includes the executable-program storage unit 200a and the address reference conversion module storage unit 200b. Executable programs are classified and arranged into multiple files, and they are stored in the executable-program storage unit 200a. There are the two types of the executable program files in the executable-program storage unit 200a: (a) the shared program files in which the modules that are called directly in common from other program files are described; and (b) the program files in which the modules that are called from other program files through the address reference conversion module are described. The address reference conversion module is created by the module creating unit 201 and stored into the address reference conversion module storage unit 200b, which will be described later.

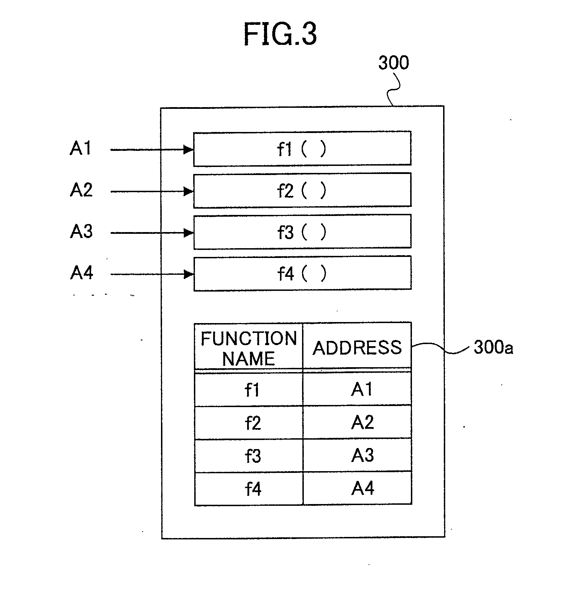

FIG. 3 shows an example of the shared program file 300 stored in the executable-program storage unit 200a of the present embodiment. It is assumed that, in the shared program file 300, the static link of the external function modules f1, f2, f3 and f4 which are called from and used for other programs is created beforehand, and the external function modules f1, f2, f3 and f4 are stored at the addresses A1, A2, A3, and A4, respectively.

As in the example shown in FIG. 3, the symbol table 300a which correlates the function names and the addresses of the external function modules contained in the shared program file concerned is stored for each shared program file in the executable-program storage unit 200a.

Moreover, the address reference conversion module storage unit 200b stores the address reference conversion modules (or the address reference conversion module archives) which are created by the address reference conversion module creating unit 201.

In the program execution apparatus of FIG. 2, the address reference conversion module creating unit 201 creates the address reference conversion module corresponding to each external function module in the shared program file stored in the executable-program storage unit 200a. And the created address reference conversion module is stored into the address reference conversion module storage unit 200b.

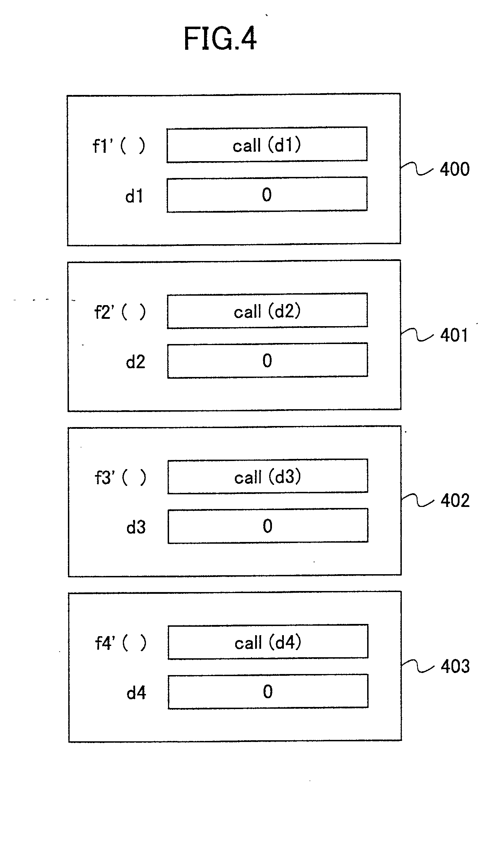

FIG. 4 shows an example of the address reference conversion module created by the address reference conversion module creating unit 201 and stored in the address reference conversion module storage unit 200b in the present embodiment.

In the example shown in FIG. 4, reference numeral 400 indicates the address reference conversion module corresponding to the external function f1 shown in FIG. 3. In the address reference conversion module 400, the address reference conversion f1' having the same function name as the external function f1, and the data area d1 in which the address value at the time of execution of the external function f1 will be stored are defined. This module f1' contains only a function call which performs a call of (or jump at) the address contained in the data area d1.

At the time of creation of the address reference conversion module, the address value which is reset to 0s is initially stored in the data area d1. The actual address value of the external function f1 is set up by the program loading unit 204 at the time of program execution, which will be described later.

Similarly, the address reference conversion modules 401-403 corresponding to the external functions f2-f4 are created as shown in FIG. 4. If the function name of the external function concerned is given, a corresponding address reference conversion module can be created automatically.

In the program execution apparatus of FIG. 2, the program transformation unit (compiler) 200 transforms the source program, which is inputted from the keyboard 111 or read from the HD 105, into the object program in an executable form that can be executed by the computer.

In the program execution apparatus of FIG. 2, the program linking unit (static linker) 203 searches from the address reference conversion module storage unit 200b the address reference conversion module corresponding to the external function which is called by the source program. This address reference conversion module contains the function module having the same function name as the external function concerned. The program linking unit 203 links the searched address reference conversion modules to the object program to form an executable program file. And the executable program file with the required function modules combined is stored into the executable-program storage unit 200a as mentioned above.

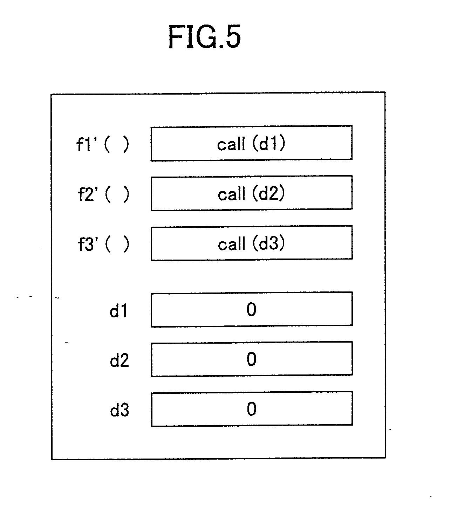

FIG. 5 shows an example of the executable program stored into the executable-program storage unit 200a by the program transformation unit 202 of the present embodiment. Each object module is transformed into the machine language by the program transformation unit 202, and the required functions are combined with the executable program by the program linking unit 203.

It is assumed that the source program originally calls the external functions f1, f2 and f3. As shown in FIG. 5, the executable program after the compilation and linking is combined with the address reference conversion modules f1', f2' and f3' instead of the external functions. However, the address value of each of the data areas d1, d2 and d3 is reset to zero at this time.

In the program execution apparatus of FIG. 2, the program loading unit (runtime loader) 204 is provided with the address retrieval unit 204a and the address setting unit 204b.

The program loading unit 204 performs program execution of the executable program stored in the executable-program storage unit 200a. A description will now be given of the program execution in the case of the executable program shown in FIG. 5.

First, the program loading unit 204 retrieves the program file which the above-mentioned program is referring to, when a request for program execution is received. In this example, the shared program file 300 shown in FIG. 3 is retrieved by the program loading unit 204 from the executable-program storage unit 200a.

And the symbol table 300a of the shared program file 300 is searched by the address retrieval unit 204a. The address values of the external functions corresponding to the address reference conversion modules combined with the object program and having the corresponding function names are acquired from the symbol table 300a. In this example, the address values A1, A2 and A3 of the external functions f1, f2 and f3 corresponding to the address reference conversion modules f1', f2' and f3' are acquired.

Next, the program loading unit 204 stores the address values into the data areas d1, d2 and d3 of the executable program by using the address setting unit 204b, respectively. Thereby, the called locations (the physical addresses) of the address reference conversion modules f1', f2' and f3' are set up, and the preparation for the program execution is completed. At the time of the program execution, the corresponding external function is executed through the combined address reference conversion module.

In the program execution apparatus of the present invention, the address reference conversion module creating unit 201, the program transformation unit 202, the program linking unit 203, and the program loading unit 204 realize the respective above-described functions when the CPU 101 performs processing in accordance with the program code instructions read from one of various recording media, such as the HD 105, the FD 107 and the CD-ROM 115, and loaded to the RAM 103.

Next, a description will be given of the flow of processing from the program creation to the program execution by the program execution apparatus of the present embodiment.

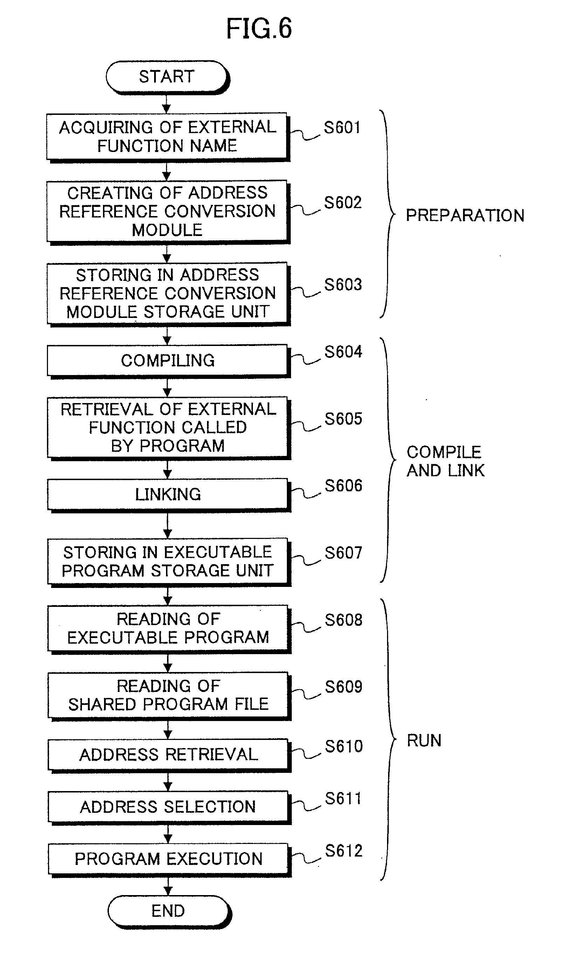

FIG. 6 is a flowchart for explaining the flow of processing from the program creation to the program execution by the program execution apparatus of the present embodiment.

Although the processing of the following processes (1) through (3) is not necessarily performed continuously and a certain time interval may be provided between the processes, the flowchart of FIG. 6 shows the whole flow intelligibly.

### (1) Preparation

At steps S601-S603, the CPU 101 prepares the address reference conversion module corresponding to each external function module by using the address reference conversion module creating unit 201.

At step S601, the CPU 101 causes the address reference conversion module creating unit 201 to search the symbol table of the shared program file 300 currently stored in the executable-program storage unit 200a, and to acquire the name of the external function described by those files one by one.

After the step S601 is performed, the CPU 101 at step S602 causes the conversion module creating unit 201 to create the address reference conversion module. The address reference conversion module contains the data area in which the address of the jump place of the external function concerned is stored, and the function having the function name that is the same as the external function concerned and including the function call to call the external function concerned.

After the step S602 is performed, the CPU 101 causes at step S603 the conversion module creating unit 201 to store the created address reference conversion module into the address reference conversion module storage unit 200b.

### (2) Compilation and linking

After the step S603 is performed, if the source program which needs compilation and linking and combination is received, the CPU 101 causes the program transformation unit 202 to transform the inputted source program into an object program at step S604 (compiling).

After the step S604 is performed, the CPU 101 causes at step S605 the program linking unit 203 to retrieve the external function called by the source program and having the same function name from the address reference conversion module storage unit 200b.

After the step S605 is performed, the CPU 101 causes at step S606 the program linking unit 203 to combine the address reference conversion module (the searched function) with the object program (linking).

After the step S606 is performed, the CPU 101 causes at step S607 the program loading unit 204 to transform the combined object program (with which the required address reference conversion module is combined) into the machine language (the executable program), and to store the executable program into the executable-program storage unit 200a.

### (3) Run

After the step S607 is performed, if the program-execution command is received, the CPU 101 causes at step S608 the program loading unit 204 to read the executable program from the executable-program storage unit 200a.

After the step S608 is performed, the CPU 101 causes at step S609 the program loading unit 204 to read the shared program file 300, which is called by the executable program concerned, from the executable-program storage unit 200a.

After the step S609 is performed, the CPU 101 causes at step S610 the address retrieval unit 204a of the program loading unit 204 to retrieve the symbol table of the file searched at the step S609, and to acquire the address of the external function module of the address reference conversion combined with the program, and the external function module having the same function name one by one.

After the step S610 is performed, the CPU 101 causes at step S611 the address setting unit 204b of the program loading unit 204 to set the acquired address to the address reference conversion module contained in the executable program.

After the step S611 is performed, the CPU 101 causes at step S612 the program loading unit 204 to execute the executable program that is made completely executable by the determination of the stored address.

According to the above-described embodiment, the shared program file, including the substance of the external function, and the program which calls the external function concerned via the address reference conversion module are statically linked completely, and no instruction code for making the object relocatable is contained. Hence, the size of the whole program becomes smaller than the size of the program in the case of the dynamic-link method.

Moreover, since the program file including the substance of the external function can be referred to from a plurality of programs unlike the conventional static-link method, the size of the whole program is reducible by summarizing the external function group used in common by the plurality of programs as a shared library.

Furthermore, since the substance of the function concerned is not included in the program which calls the external function module even when the content of the external function is corrected for the reasons of errors, the efficiency of the software development is improved because what is necessary is to update only the shared program file.

Furthermore, since the static-link method of the present invention does not need to add any change to the compiler or static linker which are the software development tool and can realize it, it is possible to make it coexist with the conventional development environment. The above-mentioned advantage can be provided without lowering the efficiency of the software development.

Next, a description will be given of the second preferred embodiment of the present invention.

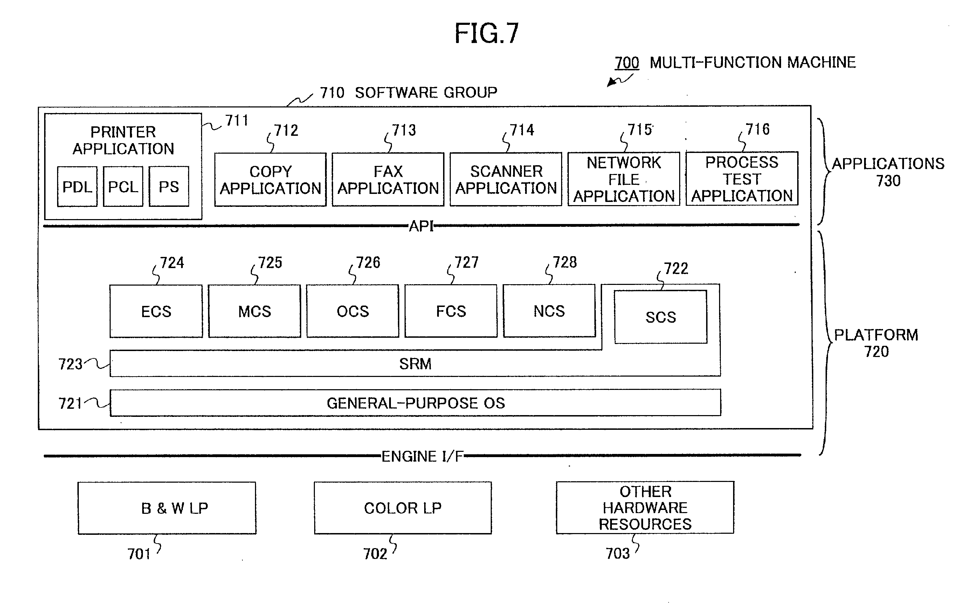

FIG. 7 shows the composition of the image forming system (the multi-function machine) of the second preferred embodiment of the present invention.

As shown in FIG. 7, the multi-function machine 700 is provided with the software group 710. The software group 710 includes the platform 720 and the applications 730. The multi-function machine 700 is provided with other hardware resources 703, such as the monochrome line printer (B&W LP) 701, the color line printer (COLOR LP) 702, and the scanner, the facsimile, etc.

The platform 720 includes the control service in which the processing request from the application is interpreted and the acquisition request of the hardware resources is generated. Moreover, the platform 720 includes the SRM (system resource manager) 723 and the general-purpose OS 721. In the SRM 723, the management of one or a plurality of hardware resources is performed and the acquisition requests from the control services are arbitrated.

The control service is formed by a plurality of control service modules, including the SCS (system control service) 722, the ECS (engine control service) 724, the MCS (memory control service) 725, the OCS (operation panel control service) 726, the FCS (facsimile control service) 727, and the NCS (network control service) 728.

In addition, the platform 720 has the application program interface (API) which provides the ability to receive the processing request from the applications 730 by using a pre-defined function.

The general-purpose OS 721 is the general-purpose operating system, such as UNIX, and carries out parallel execution of the respective programs of the platform 720 and the applications 730 as the processes. Each of the control services operates as the process and the parallel execution of one or a plurality of threads within the process is carried out.

The process of the SRM 723 performs control of the system and management of the resources in association with the SCS 722, arbitrates the processing requests from the high order layer using the hardware resources of the engines, such as the scanner unit and the printer unit, the memory, the HDD file, and the host I/O (the Centronics I/F, the network I/F, the IEEE-1394 I/F, the RS-232C I/F, etc.), and performs execution control.

Specifically, the SRM 723 determines whether the requested hardware resource can be used. In other words, it is determined whether the requested hardware resource is currently used by other requests. When it is determined that the requested hardware resource can be used, the SRM 723 notifies the high order layer that the use of the requested hardware resource is possible.

Moreover, the SRM 723 performs the scheduling of use of the hardware resources to the request from the high order layer, and carries out the requested operation directly. For example, the paper conveyance, the imaging operation, the memory reservation, the file generation, etc. are carried out by controlling the printer engine.

The process of the SCS 722 carries out the application management, the operation unit control, the system screen displaying, the LED (light emitting diode) displaying, the resource management, and the interrupted application control.

The process of the ECS 724 controls the engines of the hardware resource 703 including the monochrome line printer (B&W LP) 701, the color line printer (COLOR LP) 702, the scanner, the facsimile, etc.

The process of the MCS 725 performs the acquisition and releasing of the image memory, the use of the hard disk drive (HDD), and the compression and decompression of image data.

The process of the OCS 726 controls the control panel (operation panel) which is used as the communication means between the operator and the main control.

The process of the FCS 727 provides the facsimile transmission and reception using the PSTN/ISDN network from the respective application layer of the system controller, the registration/quotation of the various facsimile data managed by BKM (backup SRAM), the facsimile reading, the facsimile reception printing, and the applications for carrying out the intelligent transmission and reception.

The NCS 728 is the process for providing the services which can be used in common to the application which needs the network I/O. The process of the NCS 728 distributes the data received by each protocol from the network to each application, and provides interface at the time of transmitting data to the network from each application.

The applications 730 are provided to perform respective processing specific to each user service concerning the image forming processing of the printer, the copy, the scanner or the facsimile. The applications 730 include the printer application 711 described by the PDL (page description language), the PCL or the PostScript (PS), the copy application 712, the facsimile application 713, the scanner application 714, the network file application 715, and the process test application 716.

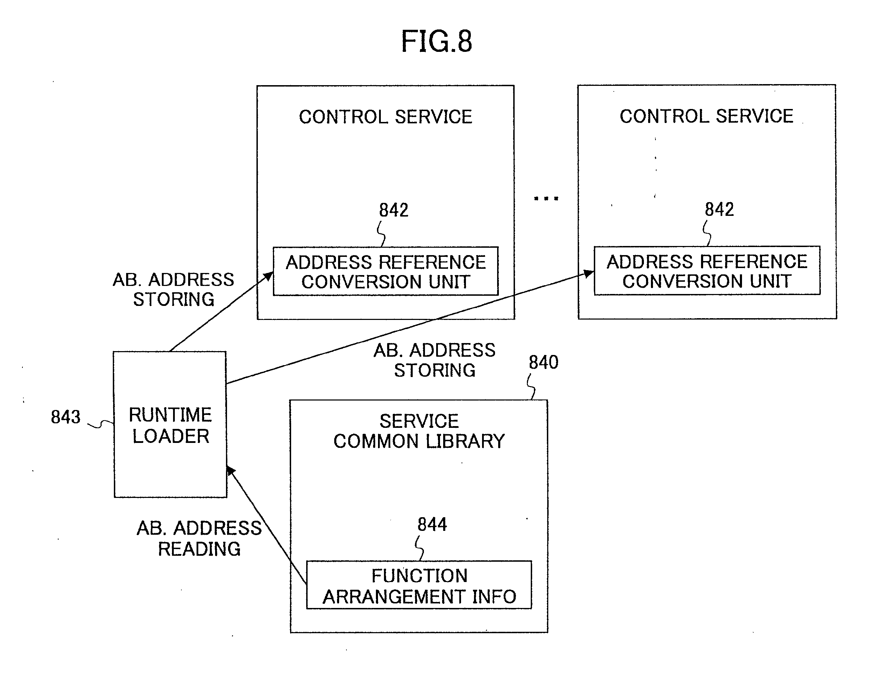

FIG. 8 shows the relationship between the control services, the service common library and the runtime loader in the multi-function machine of the second preferred embodiment.

The service common library 840 is provided such that two or more functions called in common from two or more control services of the ECS 724, the MCS 725, the SCS 722, etc. are packed into a single file. It is possible to use the functions of the service common library 840 from two or more control services in common.

For example, the process-related functions such as the process generation and opening and closing processes, the thread-related functions such as the thread generation and opening and closing processes, the file manipulation functions such as the file opening and closing processes, and so on, are registered in the service common library 840.

Moreover, the function arrangement information 844 which indicates the absolute address of the registered function is stored in the service common library 840.

The control service contains the address reference conversion module in which the data area where the absolute address of the called function will be set up at the time of program execution, and the function call to call the function at the absolute address contained in the data area concerned are described.

The runtime loader 843 performs address solution by acquiring the absolute address of each called function from the function arrangement information 844 of the service common library 840, and storing the acquired absolute address into the address reference conversion module 842 of each control service at the time of program execution of the application 730 and the system control service. The runtime loader 843 described above constitutes the address reference solution means according to the present invention.

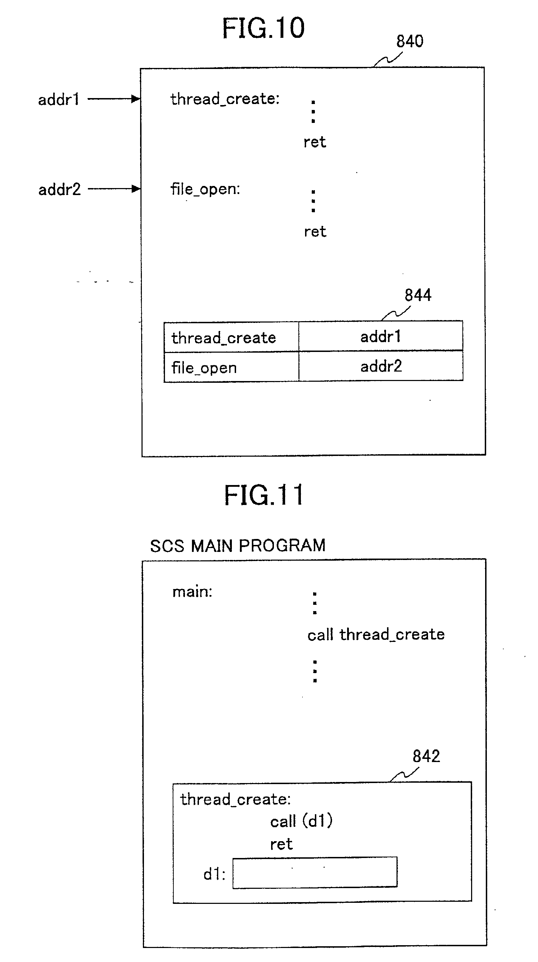

FIG. 10 shows the structure of the service common library 840 in the multi-function machine of the second preferred embodiment.

The service common library 840 contains the substance of each function, and the function arrangement information 844 which indicates the absolute address on the virtual memory space of each function. In FIG. 10, the thread_create function and the file_open function are registered in the service common library 840 as an example of the function.

As shown in FIG. 10, the absolute address "addr1" of the thread_create function, and the absolute address "addr2" of the file_open function are stored in the function arrangement information 844 of the service common library 840.

In addition, it is possible to store the function arrangement information of the thread_create function at the address addr0+offset1 and the file arrangement information of the file_open function at the address addr0+offset2, assuming that the absolute address of the start location of the service common library 840 is indicated by addr0, the relative address of the thread_create function relative to the start location of the service common library 840 is indicated by offsetl, and the relative address of the file_open function relative to the start location of the service common library 840 is indicated by offset2.

The application common library 841 is provided as a file containing a plurality of functions that are called in common from a plurality of applications including the printer application 711 and the copy application 710. The application common library 841 enables each of the applications to use the functions in common. The function which performs the processing about the process, the function which performs the processing about the thread, the function of the file manipulation, etc. are registered also into the application common library 841. The application common library 841 also has the substance of each function and the function arrangement information 844 with respect to each function. The structure of the application common library 841 is essentially the same as that of the service common library 840.

Next, a description will be given of the operation at the time of the control service execution by the multi-function machine of the second preferred embodiment. In the following, the SCS 722 is mentioned as a typical example of the control service.

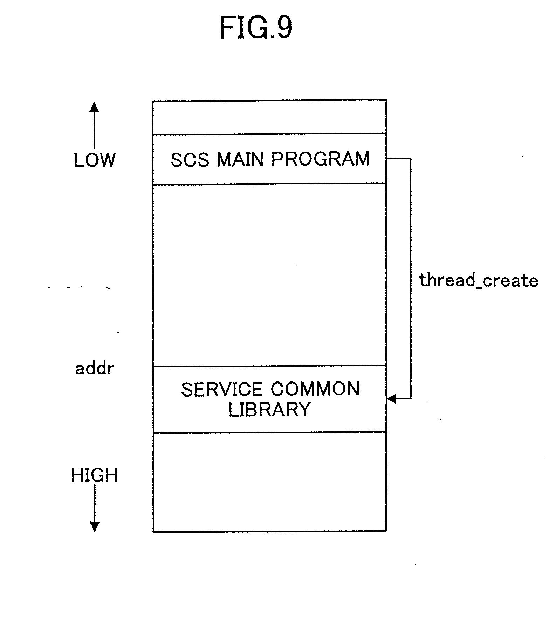

FIG. 9 shows the arrangement on the virtual memory at the time of starting the process of the SCS (system control service) 722 in the present embodiment.

As shown in FIG. 9, the main program of the SCS 722 is arranged at the low-rank address, and the service common library 840 is arranged at the high rank address.

FIG. 11 shows the contents of the main program of the SCS 722 in the present embodiment. In FIG. 11, the description focusing on the function call of the service common library 840 is shown.

As shown in FIG. 11, in the main program of the SCS 722, the thread_create function of the service common library 840 is called. The main program of the SCS 722 contains the address reference conversion module 842 for the function call concerned. In the address reference conversion module 842, the data area d1 where the absolute address of the thread_create function will be set up, and the function call to call the function at the absolute address contained in the data area d1 are described.

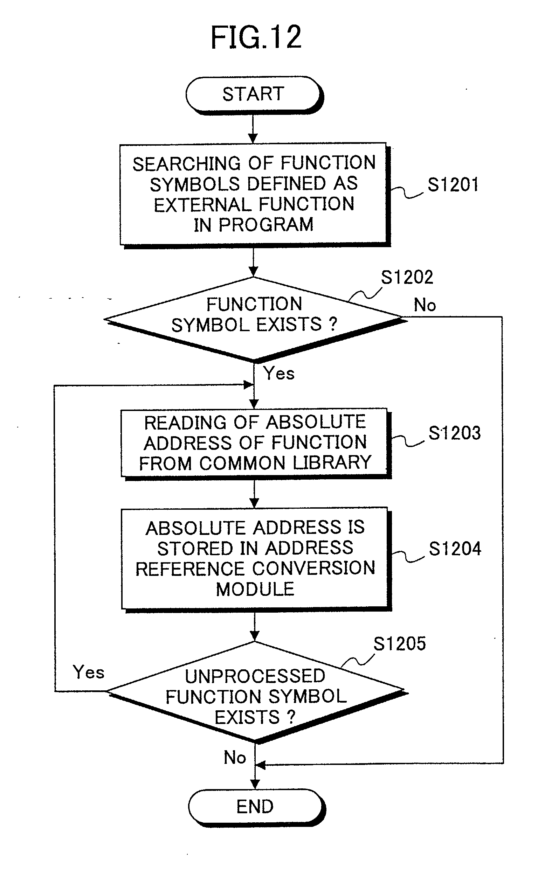

FIG. 12 shows the procedure of address solution processing of the runtime loader 843 in the multi-function machine of the second preferred embodiment.

When a request for program execution of the SCS 722 is received, the runtime loader 843 searches the function symbols defined as an external function in the main program of the SCS 722 (step S1201). Thereby, the thread_create function is searched and the symbol thread_create is obtained as a retrieval result.

At this time, the null address (for example, 0x00000000) is initially stored in the data area d1 of the address reference conversion module 842 of the main program of the SCS 722, and it is in a state in which the address solution processing is not performed yet.

Next, it is determined whether the function symbol of the external function concerned exists in the function arrangement information 844 of the service common library 840 (step S1202). When there is the function symbol, the absolute address of the function having the searched function symbol is acquired from the function arrangement information 844 of the service common library 840 (step S1203).

Next, the acquired absolute address is stored in the data area d1 of the function contained in the address reference conversion module 842 (step S1204). Thereby, the absolute address addr1 is stored in the data area d1, and the address solution of the thread_create function is performed.

The address solution processing of the external function of the main program of the SCS 722 is completed for all the function symbols searched at the step S1201 by repeating the processing of the steps S1203 and S1204 (step S1205).

When the address solution processing of all the functions is completed, the CPU 101 starts the program execution of the main program of the SCS 722. When the thread_create function is called during the execution of the main program in order to generate the thread, the control is transferred to the absolute address addr1 of the thread_create function through the address reference conversion module 842. Then, the substance of the thread_create function of the service common library 840 will be called, and the thread will be generated.

In addition, in the second preferred embodiment described above, the execution of the SCS 722 has been described, but the processing of other control services or the execution of other application programs may also be performed in the same manner.

However, at the time of program execution of the application program, the address solution processing will be made between the functions in the application common library 841.

Accordingly, in the multi-function machine of the second preferred embodiment, the service common library 840 is provided which contains the substance of the function to be called in common from two or more control services, and the function arrangement information 844 indicating the absolute address on the virtual memory of each function.

Since each control service has the address reference conversion module 842 in which the absolute address of the function is set up by the runtime loader 843 at the time of program execution, it does not need to perform development which must be accompanied with the absolute address of the called function, and can perform easily developing control service separately from the common library or other control services.

Since the development of control service does not need to determine the absolute address of the function called by forming the address reference conversion module 842 at the time of development, it can upgrade control service easily and can raise the working efficiency of development of the control service.

In the second preferred embodiment described above, the absolute address of the function is stored in the address reference conversion module 842 by the runtime loader 843 based on the function arrangement information 844 at the time of starting of control service, and the address solution processing at the time of execution will become simple, and the overhead at the time of the program execution will be shortened.

Next, a description will be given of the third preferred embodiment of the present invention.

In the multi-function machine of the second preferred embodiment, the application common library 841 is provided such that the functions that are called in common from the plurality of applications are registered in the application common library 841, and the service common library 840 is provided such that the functions that are called in common from the plurality of control services are registered in the library 840, and these are constructed independently of each other. Apart from the second preferred embodiment, the multi-function machine of the third preferred embodiment is provided such that the functions registered in the service common library 840 are further called from the functions registered in the application common library 841.

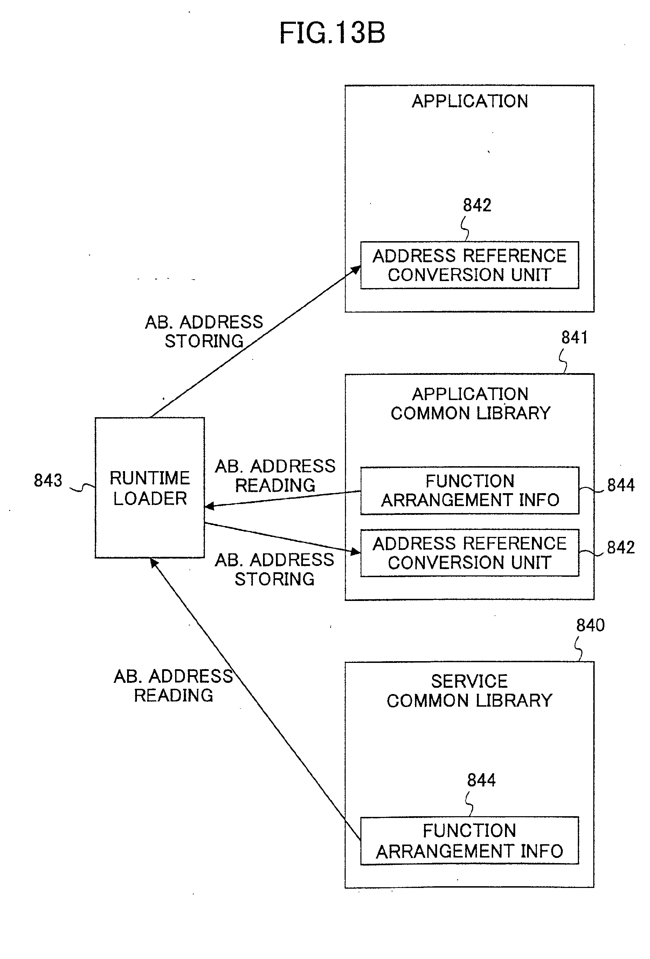

FIG. 13B shows the relationship between the application, the application common library 841 and the service common library 840 in the multi-function machine of the third preferred embodiment.

The application common library 841 is provided such that two or more functions called in common from two or more applications, such as the printer application 711, the copy application 712, the facsimile application 713 and so on, are packed into a single file. The application common library 841 can be used by two or more applications.

In the application common library 841, various functions including the font_search function for searching the font and the character_output function for outputting the character are registered therein. Moreover, in the application common library 841, the function arrangement information 844 which indicates the absolute address of each registered function is stored therein. Furthermore, in the application common library 841, the address reference conversion module 842 is stored therein. In the address reference conversion module 842, the data area where the absolute address of each registered function in the service common library 840 is stored, and the function call to call the absolute address contained in the data area concerned are described.

The application and the control service have the address reference conversion module 842 in which the data area where the absolute address of the function called is set up at the time of program execution, and the function call to call the address contained in the data area concerned are described.

At the time of program execution of the application and the control service, the runtime loader 843 first acquires the absolute address of each called function form the function arrangement information 844 of the service common library 840, and stores the acquired absolute address of each function into the address reference conversion module 842 of the application common library 841. Thereby the address solution processing in the application common library 841 is performed.

Next, the runtime loader 843 acquires the absolute address of each function from the function arrangement information 844 of the application common library 841, and stores the acquired absolute address into the address reference conversion module 842 of the application concerned.

Furthermore, when the unsolved address exists in the address reference conversion module 842 of the application concerned, address solution processing is further performed. The runtime loader 843 acquires the absolute address of the function concerned from the function arrangement information 844 of the service common library 840, and stores the acquired absolute address into the address reference conversion module 842 of the application concerned. The runtime loader 843 described above constitutes the address reference solution means according to the present invention.

The composition of the multi-function machine of the third preferred embodiment is essentially the same as that of the multi-function machine of the second preferred embodiment, and a description thereof will be omitted.

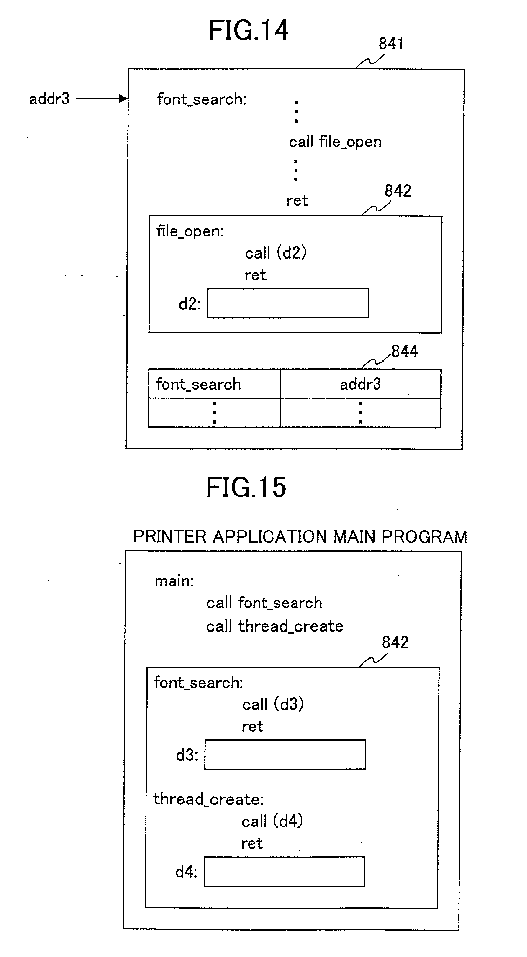

FIG. 14 shows the structure of the application common library 841 in the multi-function machine of the third preferred embodiment.

As shown in FIG. 14, the application common library 841 includes the substance of each function and the function arrangement information 844 which indicates the absolute address of each function on the virtual memory space.

In the example of FIG. 14, the font_search function as a typical function is stored in the application common library 841, and the application common library 841 contains the function arrangement information 844 which indicates the absolute address "addr3" of the font_search function.

Moreover, in the example of FIG. 14, the file_open function of the service common library 840 is called from the font_search function of the application common library 841. For this reason, the application common library 841 contains the address reference conversion module 842 for calling the file_open function.

The data area d2 where the absolute address of the file_open function is set up is stored in the address reference conversion module 842, and the processing to call the function at the absolute address contained in the data area d2 is described in the address reference conversion module 842.

Next, a description will be given of the operation at the time of the application program execution by the multi-function machine of the third preferred embodiment in the case where the printer application 711 is considered as the example.

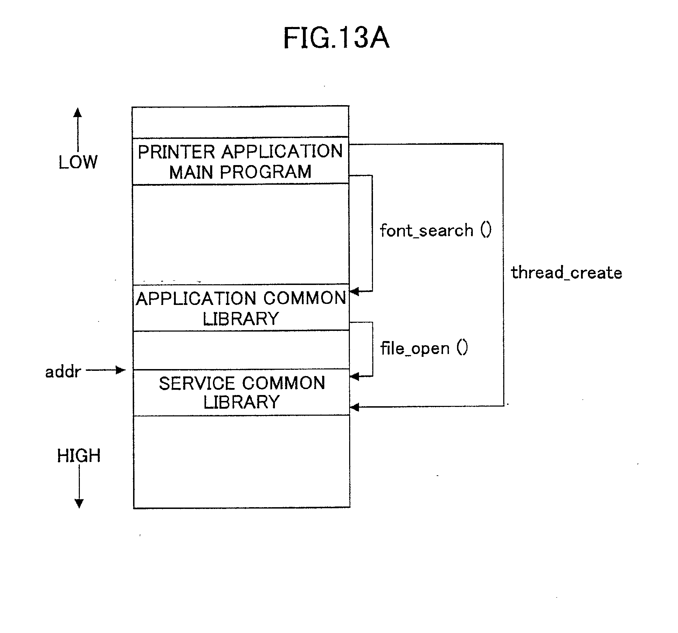

FIG. 13A shows the arrangement on the virtual memory at the time of starting of the process of the printer application 711 in the program execution apparatus of the third preferred embodiment.

As shown in FIG. 13A, the main program of the printer application 711 is arranged at the low-rank address, the application common library 841 is arranged above the printer application main program, and the service common library 840 is arranged at the high-rank address "addr".

The address "addr" at which the service common library 840 is arranged is fixed to the same address as the service common library 840 in the second preferred embodiment. Namely, the arrangement of each library is performed in the fixed position that is determined by the absolute address thereof.

FIG. 15 shows the contents of the main program of the printer application 711 in the program execution apparatus of the present embodiment. In FIG. 15, the description of the function call of the application common library 841 and the service common library 842 is focused on.

As shown in FIG. 15, the main program of the printer application 711 contains a function call to call the font_search function of the application common library 841 and a function call to call the thread_create function of the service common library 840. And the main program of the printer application 711 has the address reference conversion module 842 containing these function calls.

The data area d3 where the absolute address of the font_search function is set up is stored in the address reference conversion module 842, and the function call to call the function at the absolute address contained in the data area d3 is described in the address reference conversion module 842.

The data area d4 where the absolute address of the thread_create function is set up is stored in the address reference conversion module 842, and the function call to call the function at the absolute address contained in the data area d4 is described in the address reference conversion module 842.

Before starting the program execution of the printer application 711, the null addresses (for example, 0x00000000) are set to the data areas d3 and d4 in the address reference conversion module 842, and the address solution is not yet performed.

When the program execution of the main program of the printer application 711 is stated, the runtime loader 843 performs the address solution processing of the external functions which are called within the printer application main program.

Namely, the symbol table (the function names) of the external functions called from the application common library 841 is searched. The absolute address of the function with the searched function name "file_open" is acquired from the function arrangement information 844 of the service common library 840.

Thereby, the absolute address addr2 is acquired, and this absolute address addr2 is stored in the data area d2 of the address reference conversion module 842 in the application common library 841.

The runtime loader 843 performs the address solution processing in the main program of the printer application 711. Namely, the function symbols (names) of the external functions called from the main program of the printer application 711 is searched. In this example, the function symbols of the font_search and thread_create functions are searched.

The runtime loader 843 searches the absolute address of the function having the function symbol "font_search" by referring to the function arrangement information 844 of the application common library 841. Thereby, the absolute address addr3 is acquired, and this absolute address addr3 is stored into the data area d3 of the address reference conversion module 842 in the main program of the printer application 711.

In order that the runtime loader 843 may acquire the absolute address of the function having another searched function symbol "thread_create", the runtime loader 843 refers to the function arrangement information 844 of the application common library 841.

Since the function symbol thread_create is not registered in the function arrangement information 844 of the application common library 841, the runtime loader 843 subsequently refers to the function arrangement information 844 of the service common library 840 to find out the thread_create.

When the function symbol thread_create is retrieved, the runtime loader 843 acquires the absolute address addr1 of the thread_create function from the function arrangement information 844 of the service common library 840. Then the runtime loader 843 stores the absolute address addr1 into the data area d4 of the address reference conversion module 842 of the main program of the printer application 711. Thereby, all the address solution processing is completed.

When all the address solution processing is completed, the program execution of the main program of the printer application 711 is started.

During the execution of the main program, the font_search function is called for searching the font. The control is transferred to the absolute address addr3 of the font_search function through the address reference conversion module 842. The substance of the font_search function of the application common library 841 will be called and executed.

During the execution of the font_search function, the file_open function is called for the file opening processing. The control is transferred to the absolute address addr2 of the file_open function through the address reference conversion module 842, and the substance of the file_open function of the service common library 840 will be called and executed.

Next, when the thread_create function is called in order that the main program of the printer application 711 may generate the thread, the control is transferred to the absolute address addr1 of the thread_create function through the address reference conversion module 842, and the substance of the thread_create function of the service common library 840 will be called and executed.

In the above-described embodiment, the program execution of the printer application 711 has been described, but the processing of the program execution of other applications may be performed in the same manner.

Accordingly, in the multi-function machine of the third preferred embodiment, the service common library 840 contains the function called from the application common library 841 and the function arrangement information 844 which indicates the absolute address on the memory of the called function. The application common library 841 contains the address reference conversion module 842 in which the absolute address of the called function is set up at the time of program execution. It is not necessary to carry out the development of the application program that must be accompanied with the absolute address of the function module to be called. This makes it possible to easily carry out the development of the application common library separately from the service common library 840.

In addition, if the address reference conversion module 842 is provided, the development of the application common library 841 does not need to determine the absolute address of the function called at the time of the development. It is possible to easily carry out the upgrading of the application common library 841, and it is possible to raise the working efficiency of the development of the application common library 841.

The present invention is not limited to the above-described embodiments, and variations and modifications may be made without departing from the scope of the present invention.

Further, the present invention is based on Japanese priority application No. 2001-280642, filed on September 14, 2001, the entire contents of which are hereby incorporated by reference.

## Claims

1. A program execution apparatus for creating an executable program and executing the program, comprising:
a conversion module creating unit for creating an address reference conversion module containing a function call to call an external function module that is called from a source program;
a program transforming unit for transforming the source program into an object program; and
a linking unit for linking the object program produced by the program transforming unit to the address reference conversion module created by the conversion module creating unit to form an executable program, whereby the executable program contains the function call.

2. The program execution apparatus of claim 1 further comprising:
an address retrieval unit for retrieving an address of the external function module combined by the linking unit, when the executable program is run; and
an address setting unit for setting the address retrieved by the address retrieval unit to the address reference conversion module combined by the linking unit.

3. A program execution method for creating an executable program and executing the program, comprising the steps of:
creating an address reference conversion module containing a function call to call an external function module that is called from a source program;
transforming the source program into an object program; and
linking the object program produced by the transforming step to the address reference conversion module created by the creating step to form an executable program, whereby the executable program contains the function call.

4. The program execution method of claim 3 further comprising the steps of:
retrieving an address of the external function module combined in the linking step, when the executable program is run; and
setting the address retrieved in the address retrieval step to the address reference conversion module combined in the linking step.

5. A program execution apparatus for creating an executable program and executing the program, comprising:
a first common library containing one or a plurality of first function modules called in common by a plurality of programs, and first function arrangement information indicating an absolute address of each first function module on a memory; and
a conversion module creating unit for creating a first address reference conversion module containing a function call to call one of the first function modules at a corresponding absolute address thereof based on the first function arrangement information,
wherein the executable program is created by combining the first address reference conversion module, and, when the executable program is run, the corresponding absolute address of said one of the first function modules is stored into the first address reference conversion module contained in the executable program.

6. The program execution apparatus of claim 5 further comprising a service common library containing one or a plurality of second function modules called in common by a plurality of control service programs, and second function arrangement information indicating an absolute address of each second function module on the memory,
wherein the conversion module creating unit creates a second address reference conversion module containing a function call to call one of the -second function modules at a corresponding absolute address thereof based on the second function arrangement information.

7. The program execution apparatus of claim 6 wherein the service
service common library further contains one or a plurality of third function modules called by the first common library, and third function arrangement information indicating an absolute address of each third function module on the memory,
wherein the conversion module creating unit creates a third address reference conversion module containing a function call to call one of the third function modules at a corresponding absolute address thereof based on the third function arrangement information.

8. The program execution apparatus of claim 5, 6 or 7 further comprising an address reference solution unit for storing, when receiving a request for program execution, the corresponding absolute address of the called first function module into the first address reference conversion module contained in the executable program.

9. The program execution apparatus of claim 8 wherein the absolute address stored by the address reference solution unit is represented by a combination of a physical address indicating a start location of the first common library on the memory and a relative address of said one of the first function modules on the first common library.

10. The program execution apparatus of any one of claims 1, 2 or 5 to 9 wherein the program execution apparatus is provided in an image forming system comprising multi-function image forming hardware resources.

11. The program execution apparatus of claim 10 wherein the image forming system comprises:
application programs which respectively perform processing specific to user services related to image formation processing; and
a platform provided between the hardware resources and the application programs and including a plurality of control service programs performing hardware resource acquisition, management, execution control and image formation processing.

12. An address solution method for use in a program execution apparatus including a common library containing one or a plurality of function modules called in common by a plurality of programs, and function arrangement information indicating an absolute address of each function module on a memory, the address solution method comprising the steps of:
creating an address reference conversion module containing a function call to call one of the function modules at a corresponding absolute address thereof based on the function arrangement information;
creating the executable program by combining the address reference conversion module; and
storing, when receiving a request for program execution, the corresponding absolute address of the called function module into the address reference conversion module contained in the executable program.

13. The address solution method of claim 12 wherein the absolute address stored by said storing step is represented by a combination of a physical address indicating a start location of the first common library on the memory and a relative address of said one of the first function modules on the first common library.

14. A computer program comprising program code means that, when executed on a computer system, instruct the computer system to perform the method of any one of claims 3, 4, 12 or 13.
